# EUROPEAN PATENT APPLICATION

(11) **EP 2 931 011 A1**
(43) Date of publication of application: **14.10.2015**
(21) Application number: 14163815.5
(22) Date of filing: 08.04.2014
(51) Int. Cl.: H05K 5/02, G06F 21/86, H05K 1/02

(54) **A safety box for electronic circuit protection**

(71) Applicant: E DATA Elektronik San. ve Tic. A.S., Istanbul (TR)
(72) Inventor: SARIBAY, Tunc, Istanbul (TR); YÜKSEL, Mustafa, Istanbul (TR)
(74) Representative: Sevinç, Erkan

(57) **Abstract**

The invention relates to a safety box for protecting data stored in electronic components located in a protective volume within said safety box, the safety box comprising a top plate and bottom plate in the form of multilayer PCBs having conductive tracks. Said safety box further comprises, safety box further comprises, at least one frame which is disposed in between said top plate and bottom plate within said protective volume, and said at least one frame comprises at least one housing for encapsulating at least one conductive member which is sized and shaped to establish electrical communication in between said top plate and bottom plate.

## Description

### Technical Field of the Invention

The present invention relates to protection of stored data of the electronic components and more particularly a security box comprising a frame in a steadier manner which encapsulates at least one conductive member to establish a conductive track between a top and bottom plates for increasing the secure against the intrusion.

### Background of the Invention

A security box comprises electronic components such as a circuit board which stores the important data information such as password, bank information etc., for this reason said security boxes or data security devices are frequently attacked or embezzled without any authorization by physical means. There are numerous protections for solving that kind of problem, moreover, several known prior art techniques have been proposed for the safety construction type which prevents access to the data stored in memory.

Generally a security box or a partially secured volume is used for enclosing the key components such as memory in this volume. If any physical attack occurs to the security box, PCB or any other security system triggers the related circuits to delete or destroy the information on the components in this protective area or volume. It is also relatively effective to use to conductive member which establish a communication with layers to prevent the sensitive data information from being embezzled. Security devices, in the prior art, comprise conductive member to enhance the security which is in series connection with the protected PCB or plates for sensing any physical attacks.

A prior art publication in the technical field of the present invention may be referred to as US2010/0242115among others, the document disclosing a security cover for enclosing a protective area on the protected PCB and protecting the components in this area. The security cover of the document provides a plurality of conductive carbon granules in a housing to be in connection with locking switches on a protected PCB. In this document, said conductive carbon granules are used as a conductive member which is in series connection with protected PCB under the pressure from the cover. The problem associated therewith is that pressure of the cover to the carbon granules and placement of said carbon granules. Said carbon granules obtain the communication with PCB under favor of the pressure which is applied by the cover. If the pressure of the cover decreases, even there is no attack, said PCB may cause to delete or destroy the information on the components by unintentionally.

Another prior art may be referred to as US2010/0103631**,** the document disclosing a security protection box for enclosing the protected region of a protected circuit board in order to protect the elements in the protected region. Said security protection box comprises electrically conductive bars as a conductive member. Wall body of security protection box includes the strip-shaped grooves and said electrically conductive bars are only mounted in said strip-shaped grooves. In this prior art, it is not mentioned that said conductive bars being placed interior volume of the security protection box.

The protection box achieves the electrical connection with the protected circuit board by the electrically conductive bars which are mounted only on the wall body of security protection box. The problem associated therewith is that there is no obvious prevention about drilling of security protection box. One way of tampering is to drill into the safety box and interfere with the circuitry and/or chips on the protected area. When attacker tries to drill or pierce the plates of the security device has to try to avoid the conductive tracks on the layers.

Primary object of the present invention is to provide a safety box, which intends to protect of the sensitive data information of elements disposed in a protecting volume being embezzled by physical means.

Another object of the present invention is to provide a safety box, which composes of a plurality of multilayer PCBs and comprises a frame which encapsulates a conductive member to establish a conductive track between multilayer PCBs to enhance the security in case of any intrusion.

### Summary of the Invention

The invention relates to a safety box for protecting data stored in electronic components located in a protective volume within said safety box, said safety box comprising a top plate and bottom plate in the form of multilayer PCBs having conductive tracks. Said safety box further comprises, safety box further comprises, at least one frame which is disposed in between said top plate and bottom plate within said protective volume, and said at least one frame comprises at least one housing for encapsulating at least one conductive member which is sized and shaped to establish electrical communication in between said top plate and bottom plate.

### Brief Description of the Figures

Accompanying drawings are given solely for the purpose of exemplifying safety box which accommodates a plurality of conductive members, whose advantages over prior art were outlined above and will be explained in brief hereinafter. The drawings are not meant to delimit the scope of protection as identified in the claims nor should they be referred to alone in an effort to interpret the scope identified in said claims without recourse to the technical disclosure in the description of the present invention.
Fig. 1 demonstrates an exploded perspective view of the safety box according to the embodiment of the present invention.

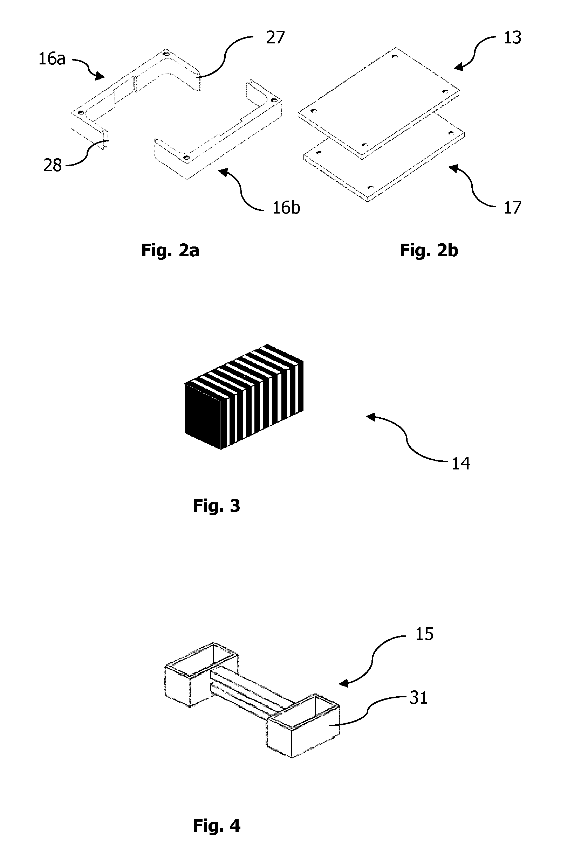

Fig. 2a demonstrates a perspective view of a first side plate and second side plate of the security box according to the embodiment of the present invention.
Fig. 2b demonstrates a perspective view of a top and bottom plate of the security box according to the embodiment of the present invention.
Fig. 3 demonstrates a perspective view of a plurality of conductive members of the security box according to the embodiment of the present invention.
Fig. 4 demonstrates a perspective view of a frame of the security box according to the embodiment of the present invention.
Fig. 5a demonstrates a perspective view of the safety box according to the embodiment of the present invention.
Fig. 5b demonstrates a rear perspective view of the security box according to the fig. 5a.
Fig. 6a demonstrates a perspective view of the side plates of the security box according to the embodiment of the present invention.
Fig. 7 demonstrates an exploded view of the security box where the conductive member and frame is placed inside of the safety box, respectively, according to the embodiment of the present invention.
Fig. 8 demonstrates a perspective view of a box-shaped frame which encapsulates cylindrical-shaped conductive bar according to the alternative embodiment of the present invention.
Fig. 9a demonstrates a perspective view of the plates used to create a secure volume according to the alternative embodiment of the present invention.
Fig. 9b demonstrates a perspective view of the safety box where the top plate and frame are removed according to the alternative embodiment of the present invention.
Fig. 10 demonstrates a perspective view of the safety box and frame according to the alternative embodiment of the present invention.
Fig. 11 demonstrates a perspective view of the safety box and top plate where the frame is disposed according to the alternative embodiment of the present invention.
Fig. 12 demonstrates a perspective view of conductive tracks according to the embodiment of the present invention
Fig. 13 demonstrates a perspective view of the layers having conductive tracks according to the embodiment of the present invention
Fig. 14a demonstrates a perspective view of the superimposed layers having conductive tracks according to the embodiment of the present invention
Fig. 14b demonstrates a perspective view of the multilayer PCB having conductive tracks according to the embodiment of the present invention

### Detailed Description of the Invention

The following numerals are used in this detailed description:
Fastener (12)
Top plate (13)
Conductive member (14, 23)
Frame (15, 24)
First side plate (16a)
Second side plate (16b)
Bottom plate (17)
Mounting hole (19)
Safety box (20)
Slot (22)
Catch slot (26)
Protrusion (27)
Groove (28)
Housing (31, 38)
Conductive track (32)
First layer (33)
Second layer (34)
Third layer (35)
Multilayer PCB (36)
Protective volume (37)

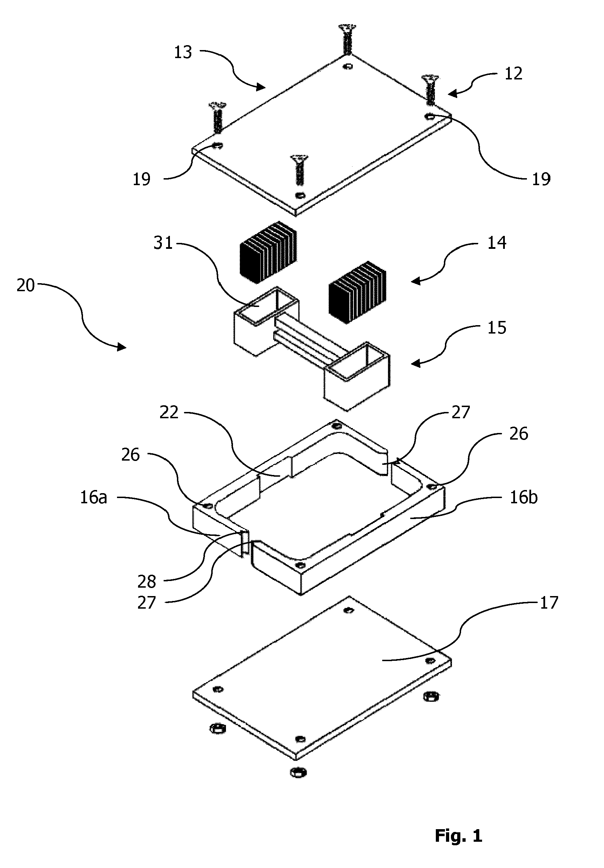

The present invention relates to a safety box (20) for protecting data of at least one key component such as a protected printed circuit which accommodates may be a mainboard of POS (point of sales) machines or the circuit boards used in other devices. As shown in fig. 1, said safety box (20) is created by a plurality of PCB covers. The printed circuit board ("PCB") mostly includes a plurality of components and a plurality of tracks for electrically connecting one component to another component and printed circuit boards having several layers, so called "multilayer" PCBs, are frequently used within the electronics.

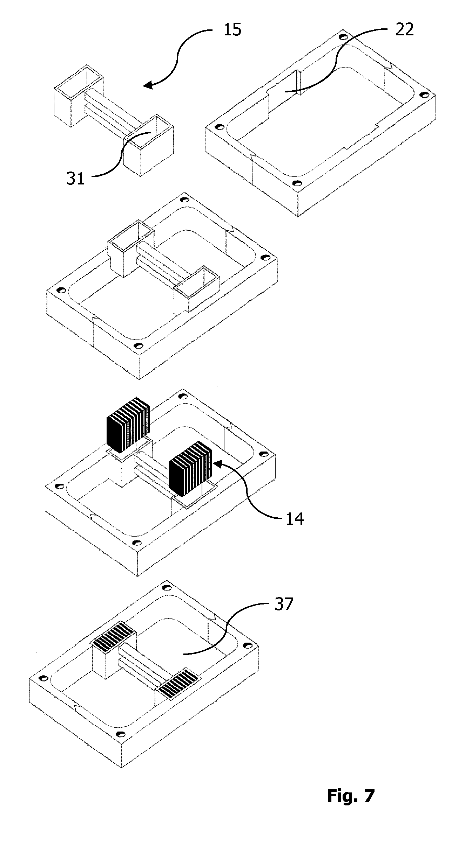

Differently from the conventional security boxes, every side of the said safety box (20) is surrounded by multilayer PCBs. Said safety box (20) encloses a protective volume (37) and protects stored data of the electronic components in the protective volume (37) as shown in fig. 7. Therefore, the safety box (20) according to the present invention is much more capable of effectively preventing the outside detection or getting the data information on the electronic components by physical means.

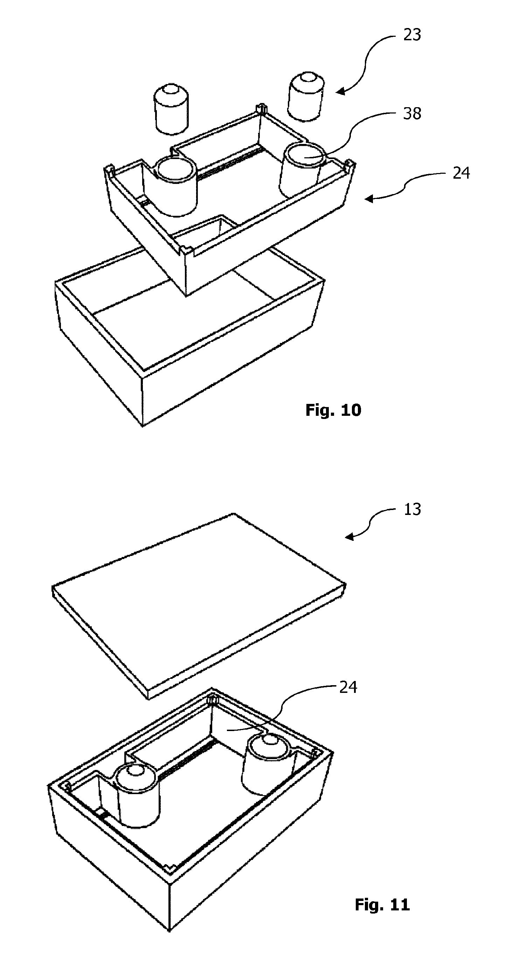

As shown in fig. 1, a top plate (13), a bottom plate (17), a first side plate (16a) and a second side plate (16b) are used for to create a secure volume as a box shape. A frame (15) is placed interior volume of the box shape. Said first side plate (16a) and second side plate (16b) is configured to accommodate a frame (15) with housing (31) by a slot (22) extending in parallel with the longitudinal axis (+Y) of the safety box (20) at the interior side of therein. Although the frame (15) is shown as only having two housing (31) to encapsulate the conductive member (14), in the figure 1, it is to be understood that frame can receive and encapsulate a plurality of conductive member (14) in other embodiments. For example, as shown in fig. 10, box-shaped frame (24) is used to encapsulate cylindrical-shaped conductive bar (23) with at least one housing (38). Said frame (15) or box-shaped frame (24) is made of a sufficiently rigid material to hold the conductive member (14) in place.

In fig. 7, said conductive member (14) is encapsulated by the housing (31) which preferably in a form quadrilateral type. It is expected that said frame (15) having size and dimension that matches with the outer surface of said conductive member (14) to accommodate therein.

For increasing the secure against the intrusion, preferably every plate of the safety box (20) is created by the multilayer PCB (36) in a communication with each other. Each multilayer PCB shown in 14b is made up by two or more layers which are stacked together with reliable predefined mutual connection between them. Every layer of the Multilayered PCB (36) supports and electrically connects each other using conductive tracks.

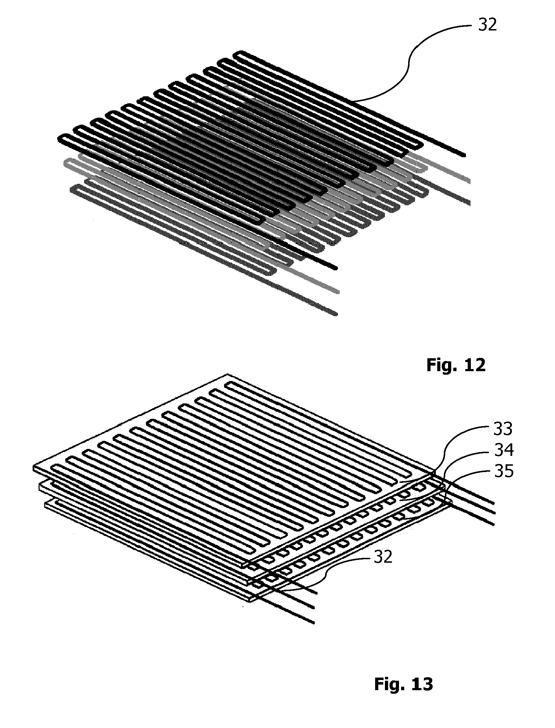

In fig. 13, a plurality of layers each having provided thereon conductive tracks (32) having a thickness in the range of from about 100µm to about 1000µm arranged in a twisting configuration are used to create a multilayer PCB. So said layers are superimposed and used to create a multilayer PCB (36) which is then used to form a safety box (20). Said multilayer PCBs have been formed on more than two layers, each separated by insulating materials and bonded. It is to be understood that the numbers of the layer can vary. Multilayer PCBs are preferably made from the same base material with copper foil on the top & bottom and one or more "inner layer" cores. As is shown in fig. 13, first, second and third layers (33, 34, and 35) are bonded together. Said layers (33, 34, and 35) can be fixed together by heat, or bonded using an adhesive. They are joined over substantially the whole of their face-to-face contact. Also they could be spot-bonded at regions and unbounded at other regions.

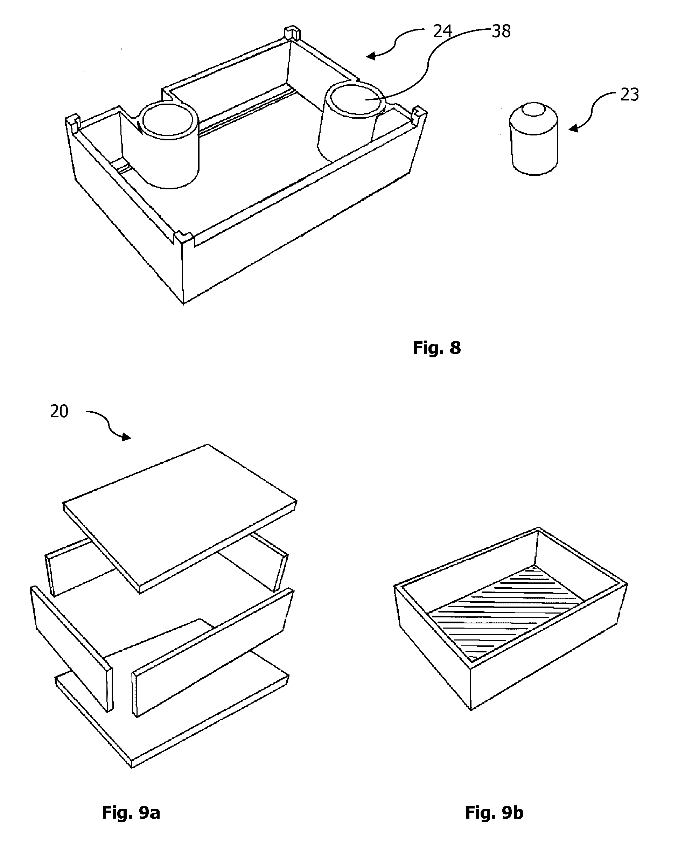

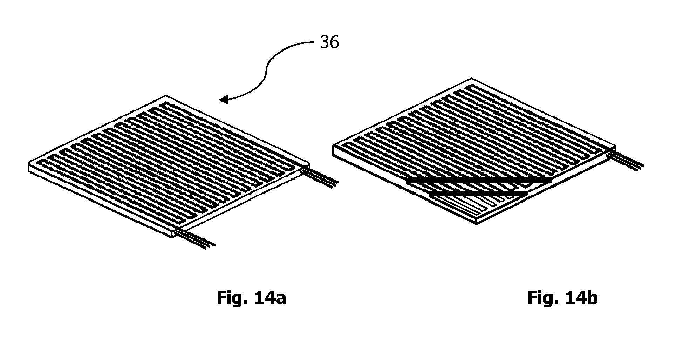

Referring to fig 9a, every superimposed layer forms a multilayer PCB (36) that used to create a secure volume. In case of piercing the multilayered PCB (36) with probe, the connection circuit on the safety box will form short circuit or disconnection to trigger the related circuits to start up the safety response device for removing or destroying the data information on the key components such as a memory device. A sensor or any other similar device detects when there is any current flowing between said layers (33, 34, and 35). If someone tries to attempt by a drilling means to the safety box that composed of a plurality of plates, conductive tracks on the every layer will form a bridge between the layers, and voltage to change. This makes the attack detectable. It is to be understood that the number of the layers having conductive track of the PCB can be increased and decreased. In fig. 14b, there layers having conductive tracks are shown. Moreover, different layer types than just having conductive track can be used for the multilayer PCB for the data exchange. As shown in fig. 12, the conductive tracks (32) compose of a narrow wire or filament of electrically conductive material. The paths of tracks are preferably a single continuous elongate electrical pathway. There may be two, or more, side-by-side paths which extend over the surface of a common carrier film generally parallel to each other.

A sensor may detect the presence or absence of a signal on each layer. Preferably the layer includes a comparator or a circuit adapted to compare a detected characteristic with an expected characteristic or with a reference. Preferably the safety box (20) includes a signal generator adapted to generate signals and to pass them through an input sheet element (not shown) of at least one layer, and a detector detecting the output. The signals are preferably unpredictable in nature, so that an observer cannot predict what they will be. The signals may be random, pseudo random, or noise-like. The signal generator may be a noise generator or a pseudo random signal generator. The input and output sheet element could comprise the same sheet element, the detector detecting whether the signals input into the sheet element are coming out from it as expected.

There is great variation between multilayers as to where exactly all of the tracks are disposed, and their relative positions. So that, unauthorized person will not know where the conductive tracks are with any precision reliable enough to drill into an electronic component protected by the layers. To enhance security of the box (20), said top plate (13) and bottom plate (17) are brought in a communication by at least one conductive member (14, 23). As shown in fig. 1, said conductive tracks of the each layer of the top plate (13) and a bottom plate (17) are in communication with each other by at least one conductive member (14, 23), thereby forming to enhanced communication with conductive tracks.

As shown in fig. 14b, said first, second and third layer (33, 34 and 35) are superimposed to form a multi-layer PCB and used to create the safety box. Said conductive tracks (32) of the every layer are not printed identically with each other's and especially placed to fill the gap between tracks on every layer when stacked together. Furthermore, it is difficult for an attacker to direct pulses of electromagnetic radiation, e.g. microwave, again with a view to learning information to use in attacking the safety box (20). Moreover, it also makes it harder for an attacker to X-ray the plate with conductive tracks to determine structural information. It is difficult to get depth information out of X-ray pictures, and having one or more layers will achieve some observation of features in X-ray. It will be appreciated that the Faraday Cage electromagnetic screening effect and X-ray blocking effect can be achieved by a conductive paths or tracks printed onto a single layer, but that having two or more layers gives a better effect.

As mentioned before, said top and bottom plates (13, 17) are preferably used as a multi-layer printed circuit boards. If an unauthorized person attempts to drill through the case of the safety box (20) one of the multilayer PCB is interrupted, in turn triggering the tamper detection circuit or another security system. In accordance with a preferred embodiment of the present invention, the various printed circuit boards making up the protective layer are each provided with one or more layers of the conductive track, which provides an output indication of tampering when shorted, disconnected or drilled. It is known that the communication between layers is very important in case of any attack.

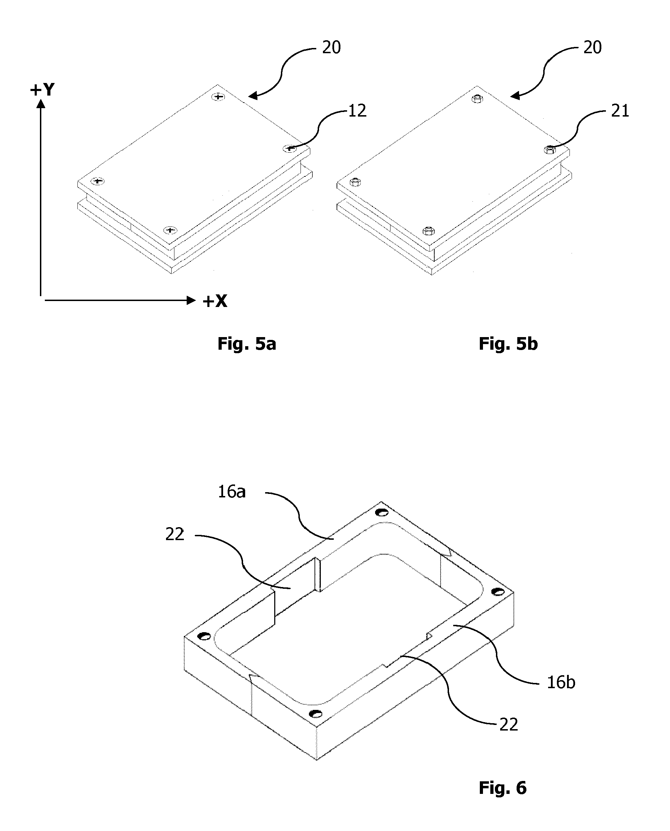

Referring to figs. 6-7, each of top plate (13), the side plates (16a, 16b) and the bottom plate (17) forming the secured volume, is provided on their layers with a plurality of conductive tracks formed in a twisting-shape, so called multilayer PCB as shown in fig. 14b. Since the every multilayers interior surface is provided with the conductive tracks, key components of the device such as memory device which is mounted into the security box is secured by the every side of the safety box (20).

In one embodiment, said first and second plates (16a, 16b) are in a U-shaped form and having a protrusion (27) and a groove at the end of said U-shaped form. As shown in fig. 6, said groove (28) adapted to engage the protrusion (27). First and second plates (16a, 16b) are used to encircle the entire periphery volume to define a fully close shape.

Referring to the fig. 6, said first side plate (16a) and second side plate (16b) has a slot (22) which is formed in its interior surface for accommodating the frame (15). To allow the use of said frame (9) is advantageous in that it ensures that encapsulation of the said conductive member (14) in a steadier manner, i.e. without losing contact with layers that may cause triggering the tamper detection circuit and delete or remove sensitive data. As shown in fig. 7, said slot (22) allow locating the frame (15) between the first and second plates17, thereby ensures the stability of conductive member (14) with its housing.

The top plate (13) and the bottom plate (17) are interconnected will now be described with reference to fig. 1, which shows an exploded perspective view of a typical safety box (20) interconnecting the conductive track on the multilayer PCBs. Said top and bottom plates (13, 17) are secured to first side plate (16a) and second side plate (16b) by way of at least two mounting holes (19) engaging with catch slots (26) of the first side plate (16a) and the second side plate (16b). By use of a plurality of fastener (12) such as bolt, said top plate (13) and bottom plate (17) is secured each other's passing through said catch slots (26) so as to form safety box (20) as shown in fig 5a. As the safety box (20) is formed with plates, then preferably fixation process such as brazing is applied.

It will be appreciated that the precise configuration of the conductive tracks of the layers is not of importance, which is more vital is the different pathways of each conductive tracks on every layer. It is clear that both conductive tracks can be relatively independent from each other so that when said conductive pathways is broken or drilled by physical attack triggers the associated circuit to destroy or erase the sensitive data information of the important elements on the protected circuit board. Moreover, said plates may also be equipped with a flexible PCB around.

Conductive member (14) is formed of metal i.e. carbon granules, in the preferred embodiment includes a eight sided block of conductive material, upper sides facing the top plate and lower side facing the bottom plate, such that a conductive tracks is established between the layers. An alternative embodiment of the present invention is shown in fig. 8; a cylinder-shaped conductive member (23) can also be used as a conductive material. It is to be understood that outer profile of the cylindrical-shaped conductive member (23) can be variable. Said cylinder-shaped conductive member (23) is encapsulated by a box-shaped frame (24) which has a housing (38) that matches the outer surface of said cylinder-shaped conductive member (23). As seen in fig. 8, said box-shaped frame (24) comprises at least one housing (38).

In a nutshell, the present invention provides an arrangement as to the installation of conductive member (14, 23), which is defined by the characterizing features as defined in Claim 1. The conductive member (14, 23) mounted to the frame (15, 24) is functional in communication between upper and the lower plates are advantageous in that it ensures steady and durable region.

It is considered that a variety of modifications, variations and substitutions may be done without departing from the scope of the present invention that is intended to be defined by the appended claims.

## Claims

1. A safety box (20) for protecting data stored in electronic components located in a protective volume (37) within said safety box, said safety box (20) comprising a top plate (13) and bottom plate (17) in the form of multilayer PCBs (36) having conductive tracks (32), **characterized in that;** said safety box (20) further comprises,
at least one frame (15, 24) which is disposed in between said top plate (13) and bottom plate (17) within said protective volume (37), and
said at least one frame (15, 24) comprises at least one housing (31, 38) for encapsulating at least one conductive member (14, 23) which is sized and shaped to establish electrical communication in between said top plate (13) and bottom plate (17).

2. A safety box (20) as in Claim 1 wherein said safety box (20) comprises a circuit for destroying or erasing the data stored in the protective volume when said conductive tracks (32) of the multilayer PCBs (36) are broken, short circuited or drilled by physical attack.

3. A safety box (20) as in Claim 1 wherein said safety box (20) comprises a first side plate (16a) and second side plate (16b) in the form of multilayer PCBs (36).

4. A safety box (20) as in Claim 3 wherein said first side plate (16a) or said second side plate (16b) comprises a slot (22) which extends at least partly in between the top plate (13) and the bottom plate (17), and which is configured to fix the frame (15) within said protective volume (37).

5. A safety box (20) as in Claim 1 wherein said conductive tracks (32) are formed in a twisting-shape or in a different pattern in different layers of the multilayer PCBs (36).

6. A safety box (20) as in Claim 1 wherein said top plate (13) is secured to the first side plate (16a) and to the second side plate (16b) by means of a plurality of fasteners (12).

7. A safety box (20) as in Claim 1 wherein said at least one conductive member (14, 23) is made of a metal.

8. A safety box (20) as in Claim 1 wherein the conductive member (23) encapsulated in the housing (38) of said frame (24) is cylinder in shape.

9. A safety box (20) as in Claim 1 wherein said conductive tracks (32) are formed by electrically conductive material having a thickness ranging from 100µm to 1000µm.

10. A safety box (20) as in Claim 3 wherein each said first and second side plates (16a, 16b) have a U-shaped profile such that they define the lateral walls of said safety box when a protrusion (27) located on the first side plate (16a) mates with a corresponding groove (28) located on the second side plate (16b).

11. A safety box (20) as in Claim 1 wherein safety box (20) is in electrical communication with a signal generator adapted to generate signals and to pass them through a layer, and a detector detecting the output.

12. A safety box (20) as in Claim 11, wherein said signals are random, pseudo random, or noise-like.
